# FASCICULE DE BREVET EUROPEEN

(11) **EP 3 604 182 B1**
(45) Date de publication et mention de la délivrance du brevet: **26.08.2026**
(21) Numéro de dépôt: 19186888.4
(22) Date de dépôt: 18.07.2019
(51) Int. Cl.: B65G 47/90, B65G 47/91

(54) **DISPOSITIF ET PROCÉDÉ DE PRÉHENSION SIMULTANÉE ET DE DÉPLACEMENT DE PRODUITS**
VORRICHTUNG UND VERFAHREN ZUM SIMULTANEN GREIFEN UND BEWEGEN VON PRODUKTEN
DEVICE AND METHOD FOR SIMULTANEOUS GRIPPING AND MOVEMENT OF PRODUCTS

(30) Priorité: 31.07.2018 FR 1857136
(43) Date de publication de la demande: 05.02.2020
(73) Titulaire: SIDEL PARTICIPATIONS, 76930 Octeville-sur-Mer (FR)
(72) Inventeur: DUCHEMIN, Guillaume, 21910 CORCELLES-LES-CITEAUX (FR); FIORI, Fabien, 21910 CORCELLES-LES-CITEAUX (FR)
(74) Mandataire: Sidel Group

(56) Documents cités:
- EP-A1- 3 281 894
- WO-A1-2012/146852
- JP-A- H04 352 618
- US-A- 4 061 528
- US-A- 4 199 050
- US-A- 5 273 152
- US-A1- 2014 097 629

## Description

La présente invention entre dans le domaine du convoyage et du conditionnement de produits au sein d'une ligne de production.

De tels produits peuvent être des contenants ou récipients, de type bouteilles, flacons ou bidons, en plastique, en métal notamment aluminium, mais préférentiellement en verre. De tels récipients comportent notamment en partie supérieure un goulot. D'autres produits peuvent être des contenants de type boîtes métalliques, notamment en fer blanc.

L'invention concerne la préhension simultanée et le déplacement de tels produits, notamment en vue d'une étape préférentielle, mais aucunement limitative, d'encaissage ou de décaissage.

De manière connue, la fabrication de produits, par exemple des bouteilles, s'effectue par différents traitements successifs, au travers d'un transport sur des convoyeurs, les produits circulant selon une ou plusieurs files. Une fois la fabrication des produits à l'unité achevée, ces produits sont conditionnés en groupe, par exemple au sein d'un conteneur, comme un carton ou une caisse. En particulier, ce conditionnement peut s'effectuer au travers d'une étape d'encaissage, où un lot de produits est prélevé et déplacé depuis une zone de prise vers une zone de dépose en vue de l'encaissage dudit lot. Sur la zone de prise, les produits arrivent accolés ou non selon une première configuration, à savoir de façon alignée les uns derrière les autres selon plusieurs colonnes, formant au moins deux rangées successives. Un lot de produits est alors prélevé par saisie simultanée de la partie supérieure de chaque produit, les produits d'un même lot étant soulevés et déplacés vers la zone de dépose, où ils sont introduits au sein d'un ou plusieurs conteneurs. Un lot comprend autant de groupes de produits que de conteneurs dans lesquels ces produits constitutifs sont introduits. Un lot est donc formé d'un ou plusieurs groupes de produits.

Inversement, lors d'une opération de décaissage, des conteneurs remplis de produits arrivent sur la zone de prise, où ils sont prélevés par lot depuis au moins un conteneur, soulevés et déplacés puis relâchés au niveau de la zone de dépose.

Ces opérations sont réalisées par un dispositif de préhension simultanée et de déplacement desdits produits, depuis la zone de prise vers la zone de dépose, et au travers d'un procédé correspondant.

Le dispositif de préhension et de déplacement, communément appelé « tête de préhension », comprend un châssis mobile depuis la zone de prise vers la zone de dépose, et inversement.

En principe, ledit châssis comprend inférieurement une pluralité de moyens de préhension, répartis en matrice selon plusieurs colonnes longitudinales et plusieurs rangées transversales. Lors du prélèvement, les moyens de préhension viennent recouvrir les produits en les coiffant, puis les saisissent, de manière à les maintenir enserrés. De tels moyens de préhension sont communément dénommés « tulipes ».

L'étape d'encaissage ou de décaissage amène un besoin particulier d'agencement des produits. En effet, entre le prélèvement et la dépose desdits produits, il se peut que leur position relative soit adaptée, pour que les lots saisis puissent être prélevés ou déposés dans les conteneurs correspondants, en particulier s'ils contiennent des espaceurs ou des croisillons. En outre, il est possible qu'un lot soit formé de plusieurs groupes de produits à prélever ou déposer chacun depuis ou au sein d'un conteneur différent, nécessitant de prévoir un espacement entre lesdits groupes, notamment en fonction de l'épaisseur des parois et de la distance entre lesdites conteneurs. Il est donc nécessaire de prévoir un réagencement des produits prélevés selon ladite première configuration vers une deuxième configuration au moment de la dépose, pour coïncider avec l'agencement requis pour leur encaissage ou décaissage.

Pour ce faire, au moins une partie des moyens de préhension sont prévus mobiles par rapport audit châssis. Ces moyens de préhension sont généralement actionnés selon deux axes, en un déplacement horizontal longitudinal et en un déplacement horizontal transversal, de manière à se rapprocher ou à s'écarter. Plus précisément, le déplacement transversal peut s'effectuer conjointement pour tous les moyens de préhension d'une même colonne, tandis que le déplacement longitudinal peut entraîner ensemble les moyens de préhension d'une même rangée. Ainsi, cette mobilité permet aux moyens de préhension de passer de la première configuration pour le prélèvement des produits au niveau de la zone de prise, à la deuxième configuration au niveau de la zone de dépose.

De plus, au moment de la prise individuelle de chaque produit d'un lot, les moyens de préhension doivent être positionnés de façon centrée sur chacun des récipients à saisir, que les produits soient immobiles ou non.

En outre, on notera que l'actionnement des moyens de préhension, en dehors de la précision dans les déplacements, doit permettre de suivre les cadences élevées de production, à savoir une cadence pouvant atteindre de l'ordre de plusieurs dizaines de milliers de récipients par heure, lors d'un traitement simultané d'un lot pouvant atteindre par exemple trente-six ou quarante-huit produits à chaque cycle de prélèvement et de dépose.

Par ailleurs, outre le fait de pouvoir saisir un lot de produits disposés selon une première configuration en zone de prise et le déposer en zone de dépose selon une deuxième configuration, il est souhaitable de disposer d'une tête de préhension capable de s'adapter rapidement et facilement à un changement de format des produits et/ou à une modification du schéma d'encaissage ou de décaissage des produits à traiter. En d'autres termes, la tête de préhension doit facilement pouvoir s'adapter à la saisie de lots dans différentes premières configurations et les déposer dans deuxièmes configurations elles aussi différentes.

Une solution largement répandue comprend des actionneurs, de type vérin, mobiles uniquement depuis une position repliée vers une position déployée, et inversement. Pour limiter la course en déplacement des moyens de préhension, sont placées des butées amovibles. Un inconvénient réside lors d'un changement de production, nécessitant le changement ou le repositionnement des butées par rapport au châssis, opération effectuée manuellement, longue et fastidieuse. De plus, en fonction des paramètres des productions susceptibles d'être traitées par une même ligne de production, il est alors nécessaire de stocker et ranger de façon ordonnée les butées inutilisées. En outre, chaque opération réalisée manuellement entraîne des risques inexorables d'erreurs dues à une intervention humaine.

Par ailleurs, un tel fonctionnement par arrêt des actionneurs contre des butées, induit un châssis dont la structure doit résister aux contraintes mécaniques subies, comme l'impact en fin de course contre lesdits butées. De plus, les déplacements s'opèrent de façon brusque, provoquant des chocs aux niveaux des produits suspendus, oscillant de façon préjudiciable. En effet, de telles oscillations entraînent inexorablement une réduction de la cadence de production du fait de l'attente nécessaire à la stabilisation des produits avant de pouvoir les déposer. De façon connexe, un tel actionnement contre des butées génère un bruit ambiant conséquent.

Il a été imaginé de rendre réglables les butées et d'automatiser leur changement de positions. Pour ce faire, des actionneurs sont ajoutés sur le châssis et permettent d'ajuster les positions des butées avant le lancement d'une production. Les butées sont déplacées, généralement par ensemble de colonnes et/ou rangées, en s'affranchissant d'une intervention manuelle contraignante. Si cette solution réduit le risque d'erreur humaine et ne nécessite plus de stockage de butées au sein de l'usine, elle ne résout par contre pas les problèmes inhérents à la présence de butées mentionnés ci-dessus. En outre, cette solution présente l'inconvénient d'alourdir la tête de préhension du fait de la présence d'actionneurs supplémentaires pour déplacer les butées. Il en résulte une augmentation du coût de l'installation et sa maintenance.

Plus avant, un perfectionnement consiste en un asservissement des déplacements par colonne ou par rangée des moyens de préhension, chaque moyen de préhension étant monté mobile sur une glissière longitudinale et sur une glissière transversale, les moyens de préhension sur une même glissière longitudinale formant une colonne, tandis que ceux montés sur une même glissière transversale formant une rangée. Une telle solution est connue notamment du document JP H04 352618.
De surcroît, le déplacement des colonnes et des rangées de moyens de préhension s'effectue par l'intermédiaire de liaisons par bielles montées en accordéon, à la manière d'un pantographe ou de parallélogramme déformable avec des liaison sous forme de mécanismes à quatre barres. Un tel mécanisme assure conjointement le rapprochement et l'écartement de façon équidistante de chaque colonne ou bien de chaque rangée, sans pouvoir adapter la course entre les colonnes ou entre les rangées. Une telle solution est connue des documents US 2014/097629, EP 3 281 894 ou encore US 4 061 528.

Une telle solution pose un inconvénient de flexibilité, limitant les changements de configurations possibles, entre le prélèvement et la dépose, empêchant toute séparation distincte des produits en groupes différents.

Les documents JPH04352618, US4199050 et WO2012/146852 décrivent différentes variantes de dispositifs de préhension. Le document JPH04352618 décrit le montage de chaque moyen de préhension sur une glissière longitudinale et une glissière transversale. Le document US4199050A, quant à lui, décrit un dispositif mettant en œuvre des actionneurs sous forme de pistons pneumatiques avec des butées externes d'arrêt de leur course. Enfin le document WO2012/146852 A1 décrit un dispositif de préhension avec des moyens de préhension en rangées et colonnes, actionnés conjointement au travers d'un déplacement simultané de façon symétrique par rapport à un plan médian vertical central (D). Ces solutions ne présentent pas la flexibilité nécessaire.

Il existe donc un réel problème pour rendre plus modulable un dispositif de préhension simultanée et de déplacement de produits, qui serait alors susceptible de s'adapter automatiquement et aisément aux différentes productions et configurations envisagées.

Il existe alors un réel besoin de rendre plus modulable un dispositif de préhension simultanée et de déplacement de produits, qui serait susceptible de s'adapter automatiquement et aisément aux différentes productions et configurations envisagées.

L'invention a pour but de pallier les inconvénients de l'état de la technique en proposant un déplacement configurable des moyens de préhension des produits, diminuant le nombre d'actionneurs requis, la complexité et la masse du dispositif correspondant.

Pour ce faire, l'invention concerne un dispositif de préhension simultanée de plusieurs produits et de déplacement de produits depuis une zone de prise où lesdits produits sont disposés selon une première configuration, vers une zone de dépose desdits produits pour un conditionnement en fardeau ou par encaissage, après les avoir réagencés selon une deuxième configuration.
Un tel dispositif comprend au moins un châssis supportant une pluralité de moyens de préhension individuelle de chacun desdits produits, lesdits moyens de préhension étant disposés en matrice selon au moins deux colonnes longitudinales et au moins deux rangées transversales, au moins une partie desdits moyens de préhension étant montés mobiles transversalement et/ou longitudinalement par rapport audit châssis, les moyens de préhension se déplaçant par colonne et par rangée, selon des déplacements en translation transversalement et longitudinalement, en rapprochement ou en écartement ; une pluralité d'actionneurs pour déplacer lesdits moyens de préhension par rapport audit châssis selon une course de déplacement, plusieurs premiers actionneurs contrôlant les déplacements longitudinaux d'une ou plusieurs rangées, tandis que plusieurs deuxièmes actionneurs contrôlent les déplacements transversaux d'une ou plusieurs colonnes des moyens de préhension.
Ledit dispositif se caractérise en ce que chacun desdits premiers actionneurs comprend une course paramétrable indépendante des autres premiers actionneurs ; et chacun desdits deuxièmes actionneurs comprend une course paramétrable indépendante des autres deuxièmes actionneurs.

Selon des caractéristiques additionnelles, non limitatives, chaque moyen de préhension peut être monté à la fois sur une glissière longitudinale et sur une glissière transversale, l'ensemble des moyens de préhension appartenant à une colonne donnée étant montés sur une même glissière longitudinale et l'ensemble des moyens de préhension appartenant à une rangée donnée étant montés sur une même glissière transversale.

Un premier desdits actionneurs peut assurer le déplacement longitudinal d'au moins une rangée desdits moyens de préhension en faisant coulisser la glissière transversale sur laquelle est montée ladite au moins une rangée, le long des glissières longitudinales.

Ledit premier actionneur peut assurer le déplacement longitudinal simultané de deux rangées, selon un mouvement symétrique l'une par rapport à l'autre.

Un deuxième desdits actionneurs peut assurer le déplacement transversal d'au moins une colonne desdits moyens de préhension en faisant coulisser la glissière longitudinale sur laquelle est montée ladite au moins une colonne, le long des glissières transversales.

Ledit deuxième actionneur peut assurer le déplacement transversal simultané de deux colonnes, selon un mouvement symétrique l'une par rapport à l'autre.

Ledit dispositif peut comprendre, commandés par lesdits actionneurs, au moins un moyen de déplacement d'au moins une partie desdits moyens de préhension, ledit moyen de déplacement comprenant au moins une courroie pourvue, d'une part, d'un brin supérieur sur lequel est monté solidaire une première rangée ou colonne et, d'autre part, d'un brin inférieur sur lequel est monté solidaire respectivement une deuxième rangée ou colonne.

Lesdits actionneurs peuvent être des vérins, de préférence des vérins électriques.

Le châssis peut être monté à l'extrémité d'un bras robotisé, notamment comprenant au moins deux axes.

L'invention concerne aussi, pour la mise en œuvre dudit dispositif, un procédé de préhension simultanée de plusieurs produits et de déplacement desdits produits, dans lequel on prélève un lot de produits au niveau d'une zone de prise, lesdits produits étant agencés selon une première configuration en matrice d'au moins deux rangées transversales et d'au moins deux colonnes longitudinales, au travers d'une pluralité de moyens de préhension individuelle de chacun desdits produits, lesdits moyens de préhension étant montés sur un châssis ; on déplace lesdits produits prélevés vers une zone de dépose par mouvements dudit châssis ; on modifie l'agencement desdits produits prélevés selon une deuxième configuration, par l'intermédiaire d'actionneurs en déplacement desdits moyens de préhension. Un tel procédé se caractérise en ce qu'il consiste au moins à modifier indépendamment l'agencement desdites rangées et desdites colonnes en paramétrant la longueur de la course des actionneurs.

Selon des caractéristiques additionnelles, non limitatives, on peut successivement prélever lesdits produits par élévation du châssis depuis ladite zone de prise ; déposer les produits par descente du châssis vers ladite zone de dépose ; modifier l'agencement desdits produits prélevés après ladite élévation et avant ladite descente.

Ainsi, notamment au travers de déplacements avec un asservissement par ensemble de ses moyens de préhension, l'invention simplifie considérablement l'opération de réagencement des groupes de produits entre la première configuration lors du prélèvement et la deuxième au moment de la dépose, rendant plus simple l'installation à contrôler et à entretenir, avec une meilleure fiabilité. En particulier, il est très avantageux lors des changements de production du fait qu'il permet de passer d'une première configuration prédéfinie à une autre et d'une deuxième configuration prédéfinie à une autre de manière très aisée.

L'invention utilise des actionneurs, notamment électriques, avec des courses configurables, limitant les contraintes mécaniques générées en fonctionnement du fait de l'absence de butée et des actionneurs associés. Ceci permet en outre un allègement considérable de la machine, réduisant d'autant son coût de fabrication. Les déplacements générés par de tels actionneurs sont plus flexibles, permettant de déterminer automatiquement et avec exactitude des courses en déplacement des moyens de préhension, sans intervention manuelle de réglage sur la machine, offrant un gain de temps considérable lors d'un changement de production. Il est aussi possible, même sur une course limitée, de contrôler l'accélération et la décélération lors des déplacements, limitant les oscillations des récipients soulevés, réduisant les risques de chocs et diminuant le temps d'attente à leur stabilisation requis pour la dépose, offrant ainsi un gain de temps sur un cycle de déplacement de produits.

De façon connexe, de tels actionneurs diminuent le bruit ambiant généré par la machine en cours de fonctionnement, supprimant les impacts des précédents vérins pneumatiques contre leur butée en fin de course.

Ainsi, la stabilité des produits lors de leur transport est accrue et plus précise, sans déplacement aléatoire parasite, permettant d'augmenter les cadences de production. La précision des réglages des courses des déplacements des moyens de préhension est augmentée et peut être entièrement automatisée, permettant de s'adapter à tous les formats de produits à déplacer et tous les schémas d'encaissage et de décaissage (c'est-à-dire le nombre et les configurations des produits à considérer par lot et par groupe qui dépendent notamment des conteneurs utilisés pour une production donnée), connus et à venir, à partir du moment où ces caractéristiques dimensionnelles sont renseignées ou détectées.

D'autres caractéristiques et avantages de l'invention ressortiront de la description détaillée qui va suivre des modes de réalisation non limitatifs de l'invention, en référence aux figures annexées dans lesquelles :
- la figure 1 représente schématiquement une vue en perspective, d'un exemple de réalisation d'un dispositif supportant plusieurs moyens de préhension répartis en matrice selon quatre colonnes et douze rangées ;
- la figure 2 représente schématiquement en perspective, en vue simplifiée et partielle, l'asservissement symétrique de moyens de préhension de deux rangées, au travers d'une courroie actionnée en déplacement longitudinal par un premier actionneur ;
- la figure 3 représente schématiquement une vue selon une coupe verticale longitudinale d'un exemple de dispositif monté sur un bras robotisé, montrant le positionnement symétrique de deux rangées des moyens de préhension sur le brin supérieur et le brin inférieur d'une courroie d'un actionneur ;
- la figure 4 représente schématiquement une vue selon une coupe verticale transversale du mode de réalisation de la figure 1, montrant notamment un actionneur dédié au déplacement symétrique de deux colonnes des moyens de préhension par rapport à une colonne centrale et le déplacement indépendant d'une autre colonnes excentrée située à droite ;
- la figure 5 représente schématiquement une vue en perspective d'un mode de réalisation préférentiel de la liaison supérieure d'un moyen de préhension, montrant les glissières autorisant les déplacements longitudinaux et transversaux dudit moyen de préhension ;
- la figure 6 représente schématiquement une vue simplifiée de dessus d'un mode particulier de configuration, montrant une colonne et une rangée de part et d'autre desquelles s'effectuent les déplacements réciproquement des autres colonnes et rangées des moyens de préhension, mettant en exergue un moyen de préhension central qui ne se déplace pas ;
- la figure 7 représente schématiquement une vue similaire à la figure 6, montrant un mode de configuration préférentiel, avec quatre colonnes et douze rangées dans une première configuration des moyens de préhension en vue du prélèvement des produits ; et
- la figure 8 représente schématiquement une vue similaire à la figure 7, après un réagencement spécifique des produits en un exemple de deuxième configuration, avec trois groupes de quatre colonnes et quatre rangées, montrant les déplacements correspondants possibles de certaines rangées et certaines colonnes des moyens de préhension.

La présente invention concerne la préhension de produits. De tels produits peuvent être des conteneurs, de type bouteilles, flacons ou bidons, voire de boîtes, en tout type de matériau, comme du plastique, du métal ou du verre. Préférentiellement, les produits traités sont des bouteilles, notamment en verre.

La présente invention concerne plus précisément le transfert de produits depuis une zone de prise vers une zone de dépose, notamment en vue de leur encaissage ou d'un conditionnement en fardeaux, voire de leur décaissage.

Ces opérations de préhension et de déplacement sont effectuées par un dispositif 1 correspondant, appelé aussi « tête de préhension ». Elles s'effectuent dans le cadre du conditionnement desdits produits au sein d'une ligne de production, fonctionnant en continu à la chaîne.

Dans ce contexte, les produits sont supportés par un convoyeur, notamment à bande sans fin, et sont ainsi acheminés, généralement selon une direction de déplacement longitudinal, vers ladite zone de prise, de manière à se positionner selon une première configuration, agencés en matrice d'au moins deux rangées transversales et d'au moins deux colonnes longitudinales. En outre, en vue d'une opération d'encaissage, ladite première configuration peut présenter un agencement régulier des produits, accolés ou espacés régulièrement. En vue d'une opération de décaissage, les produits sont groupés au sein de conteneurs, espacés régulièrement ou non, acheminés par un convoyeur jusqu'à ladite zone de prise.

On notera que la direction transversale peut s'étendre orthogonalement ou sensiblement orthogonalement au sens de circulation des produits, préférentiellement selon la largeur du dispositif 1. La direction longitudinale peut s'étendre parallèlement ou sensiblement parallèlement audit sens de circulation, préférentiellement selon la longueur dudit dispositif 1.

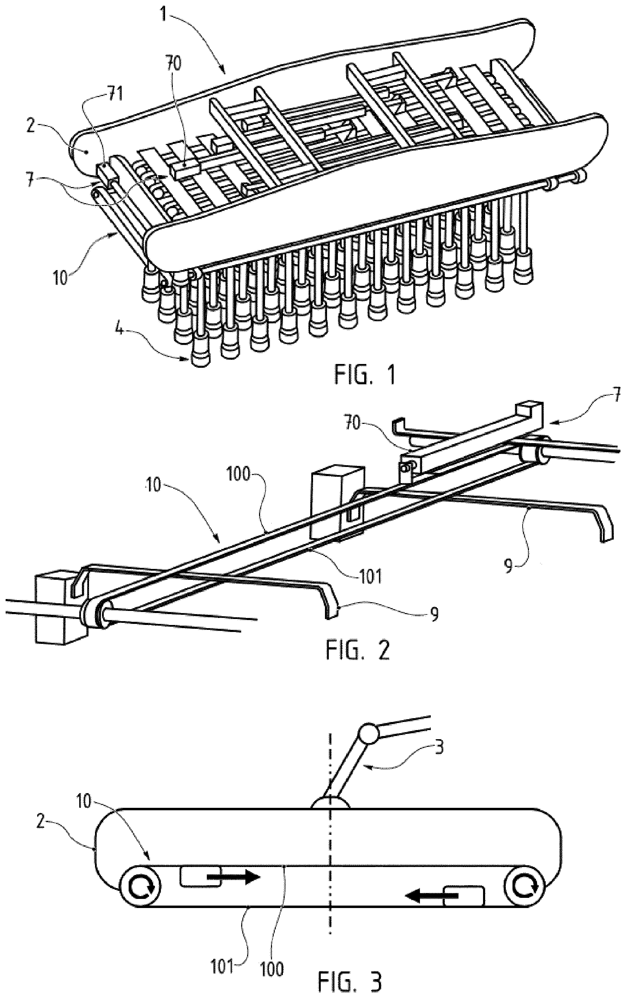

Afin d'effectuer le mouvement entre les zones de prise et de dépose, le dispositif 1 comprend un châssis 2 prévu mobile, au travers de moyens adaptés, par exemple un bras robotisé multi-axe 3, comme visible sur la figure 3. En particulier, ledit châssis 2 peut être monté à l'extrémité inférieure d'un bras robotisé comportant au moins deux axes. Un tel bras robotisé est multi-axe et comprend préférentiellement au moins trois axes de mobilité dans l'espace.
D'autres moyens peuvent être envisagés. En tout état de cause, ces moyens assurent au moins un mouvement, d'une part, en translation horizontale ou sensiblement horizontale du dispositif 1 et, d'autre part, des mouvements ascendants et descendants verticalement ou sensiblement verticalement.

Ainsi, au travers de ses mouvements, le dispositif 1 peut venir au-dessus de la zone de prise et successivement descendre pour coiffer les produits, les prélever en les saisissant, puis remonter en les soulevant. Ensuite, le dispositif 1 se déplace pour venir au-dessus la zone de dépose, descendre et relâcher les produits.

Dans un cas de figure, ladite zone de prise est fixe et les produits y sont acheminés jusqu'à s'accumuler en files, stoppés contre un arrêtoir, le convoyeur qui les transporte pouvant alors être à l'arrêt ou en fonctionnement. Le dispositif 1 vient alors se positionner au-dessus des produits une fois immobiles pour venir les saisir.

Dans un autre cas, le convoyeur transportant les produits s'arrête et le dispositif vient se positionner au-dessus pour venir saisir les produits immobiles. Il en va de même lors de la dépose, sur une zone de dépose comprenant un convoyeur fonctionnant de façon intermittente, arrêté au moment de la dépose des produits par le dispositif 1.

Dans un cas particulier, la zone de prise peut comprendre un convoyeur, en marche, la mobilité du dispositif 1 permettant alors de suivre l'avancement des produits et de rester aligné en vue de les prélever ou les déposer, à la volée, selon une fonction de suivi, dite « tracking ».

Pour opérer le prélèvement des produits, le châssis 2 supporte une pluralité de moyens de préhension 4 individuelle de chacun desdits produits.

Dès lors, afin de venir prélever un lot de produits agencés selon la première configuration, le dispositif 1 comporte généralement autant de moyens de préhension 4 qu'il y a de produits dans chaque lot à traiter.

De plus, lesdits moyens de préhension 4 sont disposés en matrice selon au moins deux colonnes longitudinales et au moins deux rangées transversales. Préférentiellement, les moyens de préhension 4 sont disposés selon autant de colonnes et de rangées que comporte le lot de produits à prélever. Selon un mode de réalisation particulier, visible sur les figure 1, 7 et 8, le dispositif 1 comprend quatre colonnes et douze rangées, soit quarante-huit moyens de préhension 4.

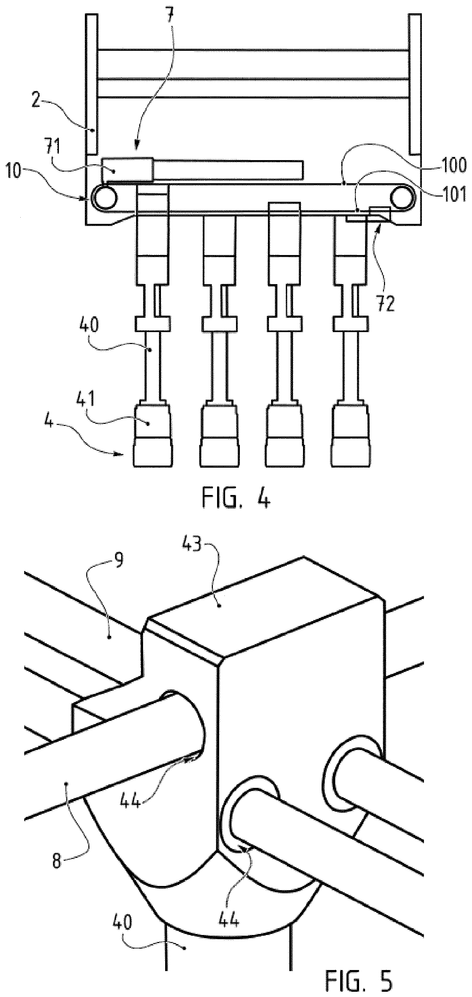

Selon un mode de réalisation préférentiel, comme visible sur les figures 1 et 4, un moyen de préhension 4 peut comprendre une tige 40 solidaire à son extrémité supérieure dudit châssis 2 et pourvue à son extrémité opposée inférieure d'un organe de préhension 41. Ce dernier peut se présenter sous la forme d'un tube ou cône, généralement appelé « tulipe », venant coiffer le haut d'un produit, notamment son goulot dans le cas d'une bouteille. Des moyens adaptés assurent la saisie, par verrouillage de l'organe 41 sur le goulot, notamment de façon pneumatique ou mécanique. Une fois saisi par un moyen de préhension 4, chaque produit suit alors les mouvements du dispositif 1.

On notera qu'un même moyen de préhension 4 peut aussi comprendre un organe de préhension 41 de plusieurs produits simultanément. Toutefois, de manière préférée, un moyen de préhension 4 est dédié à la saisie et à la dépose d'un unique produit, notamment au travers d'un unique organe de préhension 41.

Selon certains modes de réalisation, les moyens de préhension 4 sont escamotables, notamment à l'aide de vérins verticaux qui permettent de les rapprocher du châssis 2. Ceci peut s'avérer particulièrement utile lorsque le lot à traiter comporte moins de produits que de moyens de préhension 4 montés sur le châssis 2. Dans un autre cas de figure, les moyens de préhension 4 peuvent être amovibles par rapport au châssis 2, de manière à en ajouter ou en retirer en fonction du nombre de produits à saisir simultanément.

De plus, une fois les produits prélevés, il peut être nécessaire de les réagencer depuis ladite première configuration vers une deuxième configuration requise au niveau de la zone de dépose, par exemple en réagençant les produits par groupes destinés à être descendus au sein de plusieurs conteneurs.

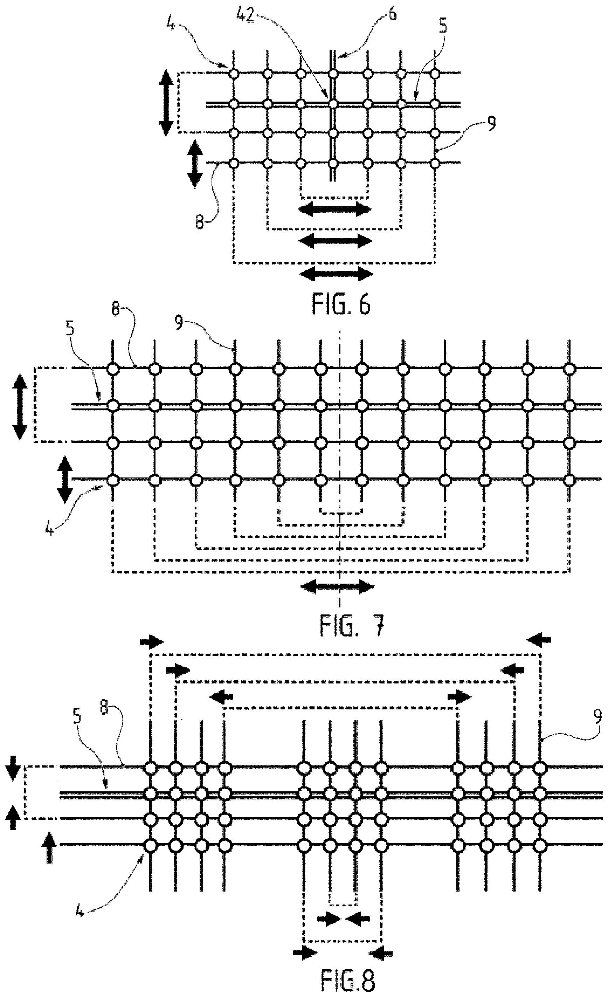

Dès lors, au moins une partie des moyens de préhension 4 est montée mobile transversalement et/ou longitudinalement par rapport audit châssis 2. De préférence, les moyens de préhension 4 appartenant, d'une part, à une même colonne sont asservis entre eux et, d'autre part, ceux appartenant à une même rangée sont asservis entre eux. Les moyens de préhension 4 se déplacent donc par colonne et par rangée, selon des déplacements en translation transversalement et longitudinalement, en rapprochement ou en écartement. Des exemples de ces déplacements sont représentés par des flèches sur les figures 6 à 8.

On notera que, comme visible sur l'exemple de la figure 6, une colonne 5 peut être prévue fixe, les autres colonnes des moyens de préhension 4 s'en rapprochant ou s'en écartant. De façon similaire, une rangée 6 peut être fixe, les autres rangées se déplaçant par rapport à elle. Dans ce cas particulier, on constate qu'un moyen de préhension 42 est immobile, au regard des déplacements des autres moyens de préhension 4.

Selon un mode préférentiel de réalisation, chaque moyen de préhension 4 est monté à la fois sur une glissière longitudinale 8 et sur une glissière transversale 9. Dès lors, l'ensemble des moyens de préhension 4 appartenant à une colonne donnée sont montés sur une même glissière longitudinale 8, tandis que l'ensemble des moyens de préhension 4 appartenant à une rangée donnée sont montés sur une même glissière transversale 9.

En outre, comme visible sur l'exemple de la figure 5, l'extrémité supérieure de la tige 40 d'un moyen de préhension 4 peut être reliée à un support 43, prévu coulissant le long d'une glissière longitudinale 8, notamment pourvue d'une seule barre, et d'une glissière transversale 9, notamment pourvue de deux barres parallèles. Ainsi, les glissières 8,9 peuvent être formées d'une ou plusieurs barres. Plus avant, une glissière 8,9 peut être montée en coulissement à ses extrémités, au sein de logements prévus à cet effet et ménagés au sein de la structure du châssis 2.

Ledit support 43 peut être constitué d'un bloc, pourvu d'orifices traversants 44, au travers desquels sont introduites les glissières 8,9.

Afin de déplacer lesdits moyens de préhension 4 par rapport audit châssis 2, le dispositif 1 comprend une pluralité d'actionneurs 7. Ces actionneurs sont notamment solidaires du châssis 2 et sont reliés aux moyens de préhension 4, assurant leur déplacement. En particulier, un actionneur 7 entraîne les déplacements selon une course de déplacement, d'un mais de préférence plusieurs moyens de préhension 4.

Plus avant, au moins un premier actionneur 70 peut contrôler les déplacements longitudinaux d'une ou plusieurs rangées, tandis qu'au moins un deuxième actionneur 71 peut contrôler les déplacements transversaux d'une ou plusieurs colonnes des moyens de préhension 4.

Bien entendu, le dispositif peut comporter un seul ou plusieurs premiers actionneurs 70. Le dispositif peut comporter un seul ou plusieurs deuxièmes actionneurs 71.

En référence aux modes de réalisation préférentiels, un premier actionneur 70 assure le déplacement longitudinal d'au moins une rangée desdits moyens de préhension 4, en faisant coulisser la glissière transversale 9 sur laquelle est montée ladite au moins une rangée, le long des glissières longitudinales 8.

De façon similaire, un deuxième actionneur 71 assure le déplacement transversal d'au moins une colonne desdits moyens de préhension 4, en faisant coulisser la glissière longitudinale 9 sur laquelle est montée ladite au moins une colonne, le long des glissières transversales 8.

Préférentiellement, un premier actionneur 70 assure le déplacement longitudinal simultané de deux rangées, selon un mouvement symétrique l'une par rapport à l'autre. En somme, les déplacements des rangées sont asservis par couple à un même premier actionneur 70. Ces déplacements s'effectuent symétriquement, par rapport à un plan médian transversal situé entre les deux rangées concernées. Ces déplacements sont donc orientés selon des sens inverses, rapprochant ou écartant les deux rangées, selon des caractéristiques identiques de déplacements, à savoir la même distance parcourue et à la même vitesse, lesdites deux rangées subissant les mêmes accélérations et décélérations. Les courses des deux rangées sont donc similaires mais en sens inverse.

Selon un mode préférentiel de réalisation, le dispositif 1 peut comprendre six premiers actionneurs pour gérer par paire les déplacements de douze rangées.

De façon similaire, selon certains modes de réalisation, un deuxième actionneur 71 peut assurer le déplacement transversal d'au moins une colonne, de préférence simultanément de deux colonnes selon un mouvement symétrique l'une par rapport à l'autre. Ce déplacement transversal sous l'action d'un deuxième actionneur 71 peut s'effectuer en coulissement le long de la glissière transversale 9 sur laquelle est montée ladite au moins une colonne.

Selon un mode préférentiel de réalisation, visible sur les figures, présentant quatre colonnes, un deuxième actionneur 71 peut contrôler les déplacements asservis des deux colonnes situées de part et d'autre de la colonne fixe 5, selon des sens inverses, selon les mêmes caractéristiques de déplacements. La dernière et quatrième colonne, située en bas sur les figures 6 à 8, peut être entraînée indépendamment par un autre deuxième actionneur 72. Une telle configuration présente l'avantage de pouvoir s'adapter aisément au traitement d'un lot de produits comprenant trois ou quatre colonnes. En effet, il suffit d'utiliser ou de retirer la quatrième colonne entraînée par le deuxième actionneur 72 selon qu'il faille traiter trois ou quatre colonnes de produits.

Selon un mode particulier de réalisation, le dispositif 1 comprend, commandés par lesdits actionneurs 70,71, au moins un moyen de déplacement d'au moins une partie desdits moyens de préhension 4. Ledit moyen de déplacement comprend au moins une courroie 10 pourvue d'un brin supérieur 100 et d'un brin inférieur 101. Une première rangée ou colonne est montée solidaire dudit brin supérieur 100, tandis que respectivement une deuxième rangée ou colonne est montée sur ledit brin inférieur 101. Dès lors, comme visible sur les figures 2 et 3, la mise en rotation de la courroie 10 dans un sens rapproche les deux rangées ou colonnes, située symétriquement l'une par rapport à l'autre (et inversement en rotation en sens inverse). Plus précisément, ce sont les glissières longitudinales et/ou transversales qui peuvent être montées sur des courroies de sorte à déplacer lesdites rangées et/ou colonnes correspondantes avec la mise en rotation des courroies.

Sur la figure 2, est représenté un premier actionneur 70, s'étendant longitudinalement, qui assure l'entraînement d'une courroie 10 pour les déplacements longitudinaux de deux rangées. En outre, ladite courroie 10 peut être solidaire dudit premier actionneur 70 au niveau de son brin supérieur 100, par l'intermédiaire d'un élément de fixation adapté, telle une équerre.

De façon similaire, un deuxième actionneur 71, s'étendant transversalement, peut assurer l'entraînement d'une courroie 10 pour les déplacements transversaux d'une ou de deux colonnes.

Ainsi, les déplacements de chaque rangée et colonne peuvent être contrôlés, par paire au moyen d'un actionneur 7 (ou bien une seule rangée voire une seule colonne, au moyen dudit autre actionneur 72).

Avantageusement, l'invention prévoit que chacun desdits actionneurs 7 comprend une course paramétrable indépendante des autres. Chaque actionneur 7 peut donc avoir une course différente d'un autre. Il est alors possible de configurer de façon distincte les déplacements des rangées et colonnes. En outre, les déplacements s'effectuent indépendamment d'une part pour les rangées et d'autre par les colonnes. En effet, les courses des premiers actionneurs 70 et des deuxièmes actionneurs 71 étant orthogonales ou sensiblement orthogonales, elles peuvent avoir la même valeur mais de fait selon des directions et des sens différents. Dès lors, chaque course dudit au moins un premier actionneur 70 peut être déterminée et modifiée de façon séparée par rapport à chaque course dudit au moins un deuxième actionneur 71.
Plus précisément, chacun desdits premiers actionneurs 70 comprend une course paramétrable indépendante des autres premiers actionneurs 70. En d'autres termes, s'il y a plusieurs premiers actionneurs 70, on peut changer la course de chacun d'entre eux.
De plus, chacun desdits deuxièmes actionneurs 71 comprend une course paramétrable indépendante des autres deuxièmes actionneurs 71. En d'autres termes, s'il y a plusieurs deuxièmes actionneurs 71, on peut changer la course de chacun d'entre eux.

Préférentiellement, lesdits actionneurs 7 peuvent être des vérins, de préférence des vérins électriques, mais peuvent aussi être des vérins pneumatiques ou encore des moteurs linéaires. Des tels actionneurs 7 sont prévus pour posséder des courses réglables, depuis une position initiale vers une position finale, au travers de positions intermédiaires qui peuvent être indexées. Ils permettent alors de configurer avec précision les courses, au travers de déplacements continus ou bien pas à pas. Ils s'affranchissent de toute butée arrêtant leur course.

L'invention permet par exemple de déplacer les moyens de préhension 4 pour réagencer les produits en groupes distincts, espacés les uns des autres.

Selon l'exemple représenté sur les figures 7 et 8, à partir d'une première configuration régulièrement espacée des produits, l'invention permet d'aligner les moyens de préhension 4 puis, une fois les produits prélevés, de contrôler les déplacements des colonnes et rangées desdits moyens correspondants, pour réagencer les produits selon trois groupes de quatre colonnes et quatre rangées. En outre, on constate que l'invention rend possible d'écarter ou rapprocher les groupes, indépendamment des distances de réagencement entre les produits d'un même groupe, offrant davantage de flexibilité au moment de la dépose, notamment de l'encaissage.

D'autres premières et deuxièmes configurations peuvent être envisagées. Les paramètres des courses en déplacements des moyens de préhension 4, par colonne et par rangée, entre les premières et deuxièmes configurations, peuvent être saisis et enregistrés au préalable par un opérateur, voire modifiés en cours de production, par exemple pour ajuster la précision de la prise des produits et/ou de leur dépose, notamment en cas de changement de conteneur d'encaissage, ou bien pour toute autre raison.

On notera qu'une fois les groupes de produits déposés et que le dispositif 1 est à vide, les actionneurs 7 assurent les déplacements des moyens de préhension 4 depuis la deuxième configuration vers la première configuration, en vue de répéter le cycle.

L'invention concerne aussi un procédé de préhension simultanée de plusieurs produits et de déplacement desdits produits, dans lequel on prélève un lot de produits au niveau de la zone de prise, lesdits produits étant agencés selon une première configuration en matrice d'au moins deux rangées transversales et d'au moins deux colonnes longitudinales. Cette opération de préhension et de déplacement s'effectue au travers d'une pluralité desdits moyens de préhension 4 individuelle de chacun desdits produits. On déplace lesdits produits prélevés vers la zone de dépose par mouvements dudit châssis 2.

Ensuite, on modifie l'agencement desdits produits prélevés selon une deuxième configuration, par l'intermédiaire des actionneurs 7 en déplacement desdits moyens de préhension 4.

Plus précisément, on prélève lesdits produits par élévation du châssis 2 depuis ladite zone de prise, à savoir après leur saisie par les moyens de préhension 4. Les mouvements du châssis 2, longitudinalement et/ou transversalement, amènent les produits au-dessus de la zone de dépose, où on les y dépose par descente du châssis 2 puis relâchement des produits par les moyens de préhension 4. Dès lors, on modifie l'agencement desdits produits prélevés après ladite élévation et avant ladite descente, à savoir lorsque les produits ne sont plus et pas encore en contact avec les surfaces initiale et finale respectivement desdites zones de prise et de dépose.

Avantageusement, l'invention consiste à modifier indépendamment l'agencement desdites rangées et desdites colonnes en paramétrant la longueur de la course des actionneurs 7.

Un tel procédé permet la mise en œuvre du dispositif 1 de préhension simultanée et de déplacement des produits selon l'invention.

## Revendications

1. Dispositif (1) de préhension simultanée de plusieurs produits et de déplacement depuis une zone de prise où lesdits produits sont disposés selon une première configuration, vers une zone de dépose desdits produits pour un conditionnement en fardeau ou par encaissage, après les avoir réagencés selon une deuxième configuration,
ledit dispositif (1) comprenant au moins :
- un châssis (2) supportant une pluralité de moyens de préhension (4) individuelle de chacun desdits produits, lesdits moyens de préhension (4) étant disposés en matrice selon au moins deux colonnes longitudinales et au moins deux rangées transversales, au moins une partie desdits moyens de préhension (4) étant montés mobiles transversalement et/ou longitudinalement par rapport audit châssis (2), les moyens de préhension (4) se déplaçant par colonne et par rangée, selon des déplacements en translation transversalement et longitudinalement, en rapprochement ou en écartement ;
- une pluralité d'actionneurs (7) pour déplacer lesdits moyens de préhension (4) par rapport audit châssis (2) selon une course de déplacement ;
- plusieurs premiers actionneurs (70) contrôlant les déplacements longitudinaux d'une ou plusieurs rangées, tandis que plusieurs deuxièmes actionneurs (71) contrôlent les déplacements transversaux d'une ou plusieurs colonnes des moyens de préhension (4) ;
**caractérisé en ce que** :
- chacun desdits premiers actionneurs (70) comprend une course paramétrable indépendante des autres premiers actionneurs (70) ; et
- chacun desdits deuxièmes actionneurs (71) comprend une course paramétrable indépendante des autres deuxièmes actionneurs (71).

2. Dispositif (1) de préhension et de déplacement selon la revendication 1, **caractérisé par le fait que** chaque moyen de préhension (4) est monté à la fois sur une glissière longitudinale (8) et sur une glissière transversale (9), l'ensemble des moyens de préhension (4) appartenant à une colonne donnée étant montés sur une même glissière longitudinale (8) et l'ensemble des moyens de préhension appartenant à une rangée donnée étant montés sur une même glissière transversale (9).

3. Dispositif (1) de préhension et de déplacement selon la revendication 2, **caractérisé par le fait qu'**un premier (70) desdits actionneurs (7) assure le déplacement longitudinal d'au moins une rangée desdits moyens de préhension (4) en faisant coulisser la glissière transversale (9) sur laquelle est montée ladite au moins une rangée, le long des glissières longitudinales (8).

4. Dispositif (1) de préhension et de déplacement selon la revendication 3, **caractérisé par le fait que** ledit premier actionneur (70) assure le déplacement longitudinal simultané de deux rangées, selon un mouvement symétrique l'une par rapport à l'autre.

5. Dispositif (1) de préhension et de déplacement selon l'une quelconque des revendications 2 à 4, **caractérisé par le fait qu'**un deuxième (71) desdits actionneurs (7) assure le déplacement transversal d'au moins une colonne desdits moyens de préhension (4) en faisant coulisser la glissière longitudinale (8) sur laquelle est montée ladite au moins une colonne, le long des glissières transversales (9).

6. Dispositif (1) de préhension et de déplacement selon la revendication 5, **caractérisé par le fait que** ledit deuxième actionneur (71) assure le déplacement transversal simultané de deux colonnes, selon un mouvement symétrique l'une par rapport à l'autre.

7. Dispositif (1) de préhension et de déplacement selon l'une quelconque des revendications 2 à 6, **caractérisé par le fait qu'**il comprend, commandés par lesdits actionneurs (7), au moins un moyen de déplacement d'au moins une partie desdits moyens de préhension (4), ledit moyen de déplacement comprenant au moins une courroie (10) pourvue, d'une part, d'un brin supérieur (100) sur lequel est monté solidaire une première rangée ou colonne et, d'autre part, d'un brin inférieur (101) sur lequel est monté solidaire respectivement une deuxième rangée ou colonne.

8. Dispositif (1) de préhension et de déplacement selon l'une quelconque des revendications 1 à 7, **caractérisé par le fait que** lesdits actionneurs (7) sont des vérins, de préférence des vérins électriques.

9. Dispositif (1) de préhension et de déplacement selon l'une quelconque des revendications 1 à 8, **caractérisé par le fait que** le châssis (2) est monté à l'extrémité d'un bras robotisé (3), notamment comprenant au moins deux axes.

10. Procédé de préhension simultanée de plusieurs produits et de déplacement desdits produits pour la mise en œuvre du dispositif de préhension selon l'une quelconque des revendications précédentes, dans lequel au moins :
- on prélève un lot de produits au niveau d'une zone de prise, lesdits produits étant agencés selon une première configuration en matrice d'au moins deux rangées transversales et d'au moins deux colonnes longitudinales, au travers d'une pluralité de moyens de préhension (4) individuelle de chacun desdits produits, lesdits moyens de préhension (4) étant montés sur un châssis (2) ;
- on déplace lesdits produits prélevés vers une zone de dépose par mouvements dudit châssis (2) ;
- on modifie l'agencement desdits produits prélevés selon une deuxième configuration, par l'intermédiaire d'actionneurs (7) en déplacement desdits moyens de préhension (4) ;
**caractérisé en ce qu'**il consiste au moins à :
- modifier indépendamment l'agencement desdites rangées et desdites colonnes en paramétrant la longueur de la course des actionneurs (7).

11. Procédé de préhension et de déplacement selon la revendication précédente, **caractérisé par le fait que** successivement :
- on prélève lesdits produits par élévation du châssis (2) depuis ladite zone de prise ;
- on dépose les produits par descente du châssis (2) vers ladite zone de dépose ;
- on modifie l'agencement desdits produits prélevés après ladite élévation et avant ladite descente.

## Patentansprüche

1. Vorrichtung (1) zum gleichzeitigen Greifen von mehreren Produkten und Verlagern von einem Aufnahmebereich, in dem die Produkte in einer ersten Konfiguration angeordnet sind, zu einem Absetzbereich für die Produkte zwecks Verpacken zu einem Gebinde oder Füllen in Kästen, nachdem sie in einer zweiten Konfiguration neu angeordnet wurden,
wobei die Vorrichtung (1) mindestens umfasst:
- ein Gestell (2), das eine Mehrzahl von Greifmitteln (4) zum individuellen Greifen jedes der Produkte trägt, wobei die Greifmittel (4) in einer Matrix entlang von mindestens zwei Längsspalten und mindestens zwei Querreihen angeordnet sind, wobei mindestens ein Teil der Greifmittel (4) in Bezug auf das Gestell (2) quer und/oder längs beweglich montiert ist, wobei sich die Greifeinrichtung (4) spalten- und reihenweise mit quer und längs translatorischen Verlagerungen zueinander hin oder voneinander weg bewegen;
- eine Mehrzahl von Aktoren (7) zum Verlagern der Greifmittel (4) gemäß einem Bewegungshub in Bezug auf das Gestell (2);
- wobei mehrere erste Aktoren (70) die Längsverlagerungen einer oder mehrerer Reihen steuern, während mehrere zweite Aktoren (71) die Querverlagerungen einer oder mehrerer Spalten der Greifmittel (4) steuern;
**dadurch gekennzeichnet, dass**:
- jeder der ersten Aktoren (70) einen von den anderen ersten Aktoren (70) unabhängigen parametrierbaren Hub aufweist; und
- jeder der zweiten Aktoren (71) einen von den anderen zweiten Aktoren (71) unabhängigen parametrierbaren Hub aufweist.

2. Vorrichtung (1) zum Greifen und Verlagern nach Anspruch 1, **dadurch gekennzeichnet, dass** jedes Greifmittel (4) sowohl auf einer Längsgleitführung (8) als auch auf einer Quergleitführung (9) montiert ist, wobei sämtliche Greifmittel (4), die zu einer gegebenen Spalte gehören, auf einer selben Längsgleitführung (8) montiert sind, und wobei sämtliche Greifmittel, die zu einer gegebenen Reihe gehören, auf einer selben Quergleitführung (9) montiert sind.

3. Vorrichtung (1) zum Greifen und Verlagern nach Anspruch 2, **dadurch gekennzeichnet, dass** ein erster (70) der Aktoren (7) die Längsverlagerung mindestens einer Reihe der Greifmittel (4) gewährleistet, indem er die Quergleitführung (9), auf der die mindestens eine Reihe montiert ist, entlang der Längsgleitführungen (8) verschiebt.

4. Vorrichtung (1) zum Greifen und Verlagern nach Anspruch 3, **dadurch gekennzeichnet, dass** der erste Aktor (70) die gleichzeitige Längsverlagerung von zwei Reihen gemäß einer zueinander symmetrischen Bewegung gewährleistet.

5. Vorrichtung (1) zum Greifen und Verlagern nach einem der Ansprüche 2 bis 4, **dadurch gekennzeichnet, dass** ein zweiter (71) der Aktoren (7) die Querverlagerung mindestens einer Spalte der Greifmittel (4) gewährleistet, indem er die Längsgleitführung (8), auf der die mindestens eine Spalte montiert ist, entlang der Quergleitführungen (9) verschiebt.

6. Vorrichtung (1) zum Greifen und Verlagern nach Anspruch 5, **dadurch gekennzeichnet, dass** der zweite Aktor (71) die gleichzeitige Querverlagerung von zwei Spalten gemäß einer zueinander symmetrischen Bewegung gewährleistet.

7. Vorrichtung (1) zum Greifen und Verlagern nach einem der Ansprüche 2 bis 6, **dadurch gekennzeichnet, dass** sie, gesteuert durch die Aktoren (7), mindestens ein Verlagerungsmittel zum Verlagern mindestens eines Teils der Greifmittel (4) umfasst, wobei das Verlagerungsmittel mindestens einen Riemen (10) umfasst, der zum einen mit einem Obertrum (100), an dem eine erste Reihe oder Spalte befestigt ist, und zum anderen mit einem Untertrum (101), an dem eine zweite Reihe oder Spalte befestigt ist, versehen ist.

8. Vorrichtung (1) zum Greifen und Verlagern nach einem der Ansprüche 1 bis 7, **dadurch gekennzeichnet, dass** die Aktoren (7) Zylinder sind, vorzugsweise elektrische Zylinder.

9. Vorrichtung (1) zum Greifen und Verlagern nach einem der Ansprüche 1 bis 8, **dadurch gekennzeichnet, dass** das Gestell (2) am Ende eines Roboterarms (3), der insbesondere mindestens zwei Achsen umfasst, montiert ist.

10. Verfahren zum gleichzeitigen Greifen von mehreren Produkten und Verlagern der Produkte zum Einsetzen der Vorrichtung zum Greifen nach einem der vorhergehenden Ansprüche, wobei mindestens:
- eine Partie von Produkten in einem Aufnahmebereich entnommen wird, wobei die Produkte in einer ersten Konfiguration in einer Matrix aus mindestens zwei Querreihen und mindestens zwei Längsspalten angeordnet sind, über eine Mehrzahl von Greifmitteln (4) zum individuellen Greifen jedes der Produkte, wobei die Greifmittel (4) an einem Gestell (2) montiert sind;
- die entnommenen Produkte durch Bewegungen des Gestells (2) zu einem Absetzbereich hin verlagert werden;
- die Anordnung der entnommenen Produkte über Aktoren (7) zur Verlagerung der Greifmittel (4) zu einer zweiten Konfiguration geändert wird;
**dadurch gekennzeichnet, dass** es mindestens darin besteht:
- die Anordnung der Reihen und der Spalten unabhängig zu ändern, indem die Länge des Hubs der Aktoren (7) parametriert wird.

11. Verfahren zum Greifen und Verlagern nach dem vorhergehenden Anspruch, **dadurch gekennzeichnet, dass** nacheinander:
- die Produkte durch Anheben des Gestells (2) aus dem Aufnahmebereich entnommen werden;
- die Produkte durch Absenken des Gestells (2) zu dem Absetzbereich hin abgesetzt werden;
- die Anordnung der entnommenen Produkte nach dem Anheben und vor dem Absenken geändert wird.

## Claims

1. Device (1) for simultaneously gripping a plurality of products and moving from a pick-up zone where said products are disposed in a first configuration to a zone for setting down said products for packaging in bundles or by boxing, after having rearranged them in a second configuration,
the device (1) comprising at least:
- a frame (2) supporting a plurality of means (4) for individually gripping each of said products, said gripping means (4) being disposed in a matrix in at least two longitudinal columns and at least two transverse rows, at least a part of said gripping means (4) being mounted so as to be able to move transversely and/or longitudinally with respect to said frame (2), the gripping means (4) moving by columns and by rows, according to movements in translation transversely and longitudinally, closer together or further apart;
- a plurality of actuators (7) for moving said gripping means (4) with respect to said frame (2) along a movement travel;
- a plurality of first actuators (70) controlling the longitudinal movements of one or more rows, while a plurality of second actuators (71) control the transverse movements of one or more columns of the gripping means (4);
**characterized in that**:
- each of said first actuators (70) comprises a parameterizable travel independent of the other first actuators (70); and
- each of said second actuators (71) comprises a parameterizable travel independent of the other second actuators (71).

2. Gripping and moving device (1) according to Claim 1, **characterized in that** each gripping means (4) is mounted both on a longitudinal slide (8) and on a transverse slide (9), all the gripping means (4) belonging to a given column being mounted on one and the same longitudinal slide (8) and all the gripping means belonging to a given row being mounted on one and the same transverse slide (9).

3. Gripping and moving device (1) according to Claim 2, **characterized in that** a first (70) of said actuators (7) ensures the longitudinal movement of at least one row of said gripping means (4) by making the transverse slide (9) on which said at least one row is mounted slide along the longitudinal slides (8).

4. Gripping and moving device (1) according to Claim 3, **characterized in that** said first actuator (70) ensures the simultaneous longitudinal movement of two rows, with symmetrical movement with respect to one another.

5. Gripping and moving device (1) according to any one of Claims 2 to 4, **characterized in that** a second (71) of said actuators (7) ensures the transverse movement of at least one column of said gripping means (4) by making the longitudinal slide (8) on which said at least one column is mounted slide along the transverse slides (9).

6. Gripping and moving device (1) according to Claim 5, **characterized in that** said second actuator (71) ensures the simultaneous transverse movement of two columns, with symmetrical movement with respect to one another.

7. Gripping and moving device (1) according to any one of Claims 2 to 6, **characterized in that** it comprises, controlled by said actuators (7), at least one means for moving at least a part of said gripping means (4), said moving means comprising at least one belt (10) provided, on the one hand, with an upper strand (100) on which a first row or column is securely mounted and, on the other hand, with a lower strand (101) on which a second row or column is securely mounted, respectively.

8. Gripping and moving device (1) according to any one of Claims 1 to 7, **characterized in that** said actuators (7) are rams, preferably electric rams.

9. Gripping and moving device (1) according to any one of Claims 1 to 8, **characterized in that** the frame (2) is mounted at the end of a robot arm (3), in particular comprising at least two axes.

10. Method for simultaneously gripping a plurality of products and moving said products to implement the gripping device according to any one of the preceding claims, wherein at least:
- a batch of products is picked up at a pick-up zone, said products being arranged in a first matrix configuration of at least two transverse rows and at least two longitudinal columns, through a plurality of means (4) for individually gripping each of said products, said gripping means (4) being mounted on a frame (2);
- said picked-up products are moved to a set-down zone by movements of said frame (2);
- the arrangement of said picked-up products is modified according to a second configuration, via actuators (7) moving said gripping means (4);
**characterized in that** it consists at least in:
- independently modifying the arrangement of said rows and said columns by parameterizing the length of the travel of the actuators (7).

11. Gripping and moving method according to the preceding claim, **characterized in that**, successively:
- said products are picked up by raising the frame (2) from said pick-up zone;
- the products are set down by lowering the frame (2) towards said set-down zone;
- the arrangement of said picked-up products is modified after said raising and before said lowering.
